Europäisches Patentamt

European Patent Office

Office européen des brevets

(19)

(11) Numéro de publication : **0 300 870 B1**

(12) # FASCICULE DE BREVET EUROPEEN

(45) Date de publication du fascicule du brevet :
24.04.91 Bulletin 91/17

(51) Int. Cl.⁵ : **F16H 13/06**

(21) Numéro de dépôt : 88401767.4

(22) Date de dépôt : 06.07.88

(54) **Anneau presseur élastique pour mécanismes réducteurs multiplicateurs à au moins une sortie, destiné par exemple à la commande d'accessoires sur des véhicules.**

(30) Priorité : 10.07.87 FR 8709873

(43) Date de publication de la demande :
25.01.89 Bulletin 89/04

(45) Mention de la délivrance du brevet :
24.04.91 Bulletin 91/17

(84) Etats contractants désignés :
DE ES GB IT SE

(56) Documents cités :
DE-C- 239 854
FR-A- 2 433 684
US-A- 26 978
US-A- 2 344 078

(73) Titulaire : **ROCKWELL AUTOMOTIVE BODY SYSTEMS-FRANCE EN ABREGE:ROCKWELL ABS-FRANCE**
**Tour Gan Cédex 13**
**F-92082 Paris La Defense 2 (FR)**

(72) Inventeur : **Periou, Pierre**
**15 Les Bocages Bruns**
**F-95000 Cergy Pontoise (FR)**

(74) Mandataire : **Martin, Jean-Paul et al**
**c/o CABINET LAVOIX 2, Place d'Estienne d'Orves**
**F-75441 Paris Cedex 09 (FR)**

## Description

La présente invention a pour objet un mécanisme réducteur-multiplicateur et respectivement un anneau presseur élastique, utilisables pour l'entraînement de pièces extrêmement diverses, notamment des accessoires de véhicules automobiles (glaces, toits ouvrants,...) comme défini dans le préambule de la revendication 1 et 2 respectivement. Les caractéristiques du préambule sont connues du document US-A-2344078 ou du document FR-A-24 33 684.

Pour assurer une réduction ou une démultiplication d'un mouvement, on utilise classiquement soit des trains d'engrenages, soit des galets de pression, le rapport de multiplication et de réduction étant celui des rayons des engrenages ou des galets.

Les trains d'engrenages sont bruyants, surtout à grande vitesse ou lorsque le couple résistant à la roue de sortie est nul.

On a donc également pensé à utiliser une transmission par courroie, qui offre l'avantage d'être plus silencieuse, mais dont le rendement est moins bon et qui est coûteuse.

Dans les réducteurs multiplicateurs à galets, ces derniers sont montés sur des axes traversant des paliers de support qui transmettent aux galets des efforts presseurs exercés sur un plateau. Dans ces mécanismes à galets, il existe une relation entre le couple à transmettre d'un galet à l'autre, et l'effort presseur. Le couple moteur peut en effet ne pas être transmis si l'effort presseur est insuffisant, et ce en raison du patinage du galet moteur sur le galet entraîné.

Ce phénomène est du aux frottements de glissement entre les galets. En effet, pour des galets et un effort presseur donnés, il existe une limite au couple à transmettre : si cette limite est dépassée, les galets se mettent à patiner. Par contre, pour un couple à transmettre donné, l'effort presseur sera d'autant plus important que le coefficient de frottement de roulement des galets est faible. Par exemple, pour un couple donné et deux galets en acier, il faudra un effort presseur très élevé. Par contre, avec deux galets en caoutchouc, l'effort presseur nécessaire sera beaucoup plus faible.

Les mécanismes à galets ont un rendement relativement faible, car les efforts exercés au niveau des paliers sont importants et induisent des pertes par frottement entre les axes qui tournent et les paliers qui sont fixes.

On connait également des mécanismes à une seule entrée et plusieurs sorties, par exemple un moteur pouvant commander plusieurs fonctions au lieu de recourir à autant de moteurs que de fonctions distinctes. Ainsi dans le domaine de la commande des accessoires sur un véhicule, on peut entraîner à partir d'un seul moteur divers éléments, tels que dossiers inclinables, rehausse de sièges, sièges coulissants, etc. Il est connu d'utiliser à cette fin des trains d'engrenages ou des courroies, ou encore des galets presseurs.

L'invention a donc pour but d'améliorer un mécanisme réducteur-multiplicateur du genre connu.

Le mécanisme visé par l'invention comporte des galets de transmission d'un couple d'un arbre d'entrée à au moins un arbre de sortie.

Suivant l'invention, les moyens pour presser les galets sur l'arbre d'entrée comprennent un anneau disposé de manière à exercer sur les galets un effort presseur les appliquant sur l'arbre d'entrée.

Cet anneau exerce son effort directement sur les galets, et permet donc de remplacer le frottement de glissement par un frottement de roulement, pour lequel les pertes correspondantes sont beaucoup plus faibles que les pertes de frottement de glissement générées au niveau des paliers dans les mécanismes antérieurs à galets, ce qui permet d'améliorer notablement le rendement.

Suivant un premier mode de réalisation, le mécanisme comporte au moins deux galets en contact avec un cylindre terminal de l'arbre d'entrée ou de sortie, et l'anneau enveloppe les galets sur la surface desquels il exerce un effort presseur de compression radiale sur le cylindre terminal, l'anneau ayant à cet effet un diamètre intérieur inférieur à la somme des diamètres du cylindre et de deux galets.

Suivant une autre particularité de ce mode de réalisation, l'anneau presseur est muni de moyens de transmission du couple, par exemple au moins un pion solidaire de l'anneau est engagé dans une ouverture d'un bras radial solidaire de l'arbre d'entrée ou de sortie.

Dans ce mécanisme, chacun des deux arbres peut être utilisé soit comme arbre d'entrée, soit comme arbre de sortie, le mécanisme étant dans un cas réducteur et dans l'autre cas multiplicateur.

Le mécanisme ainsi réalisé présente non seulement un rendement nettement supérieur à celui des dispositifs antérieurs à galets, mais est également silencieux en raison de l'absence de bruit produit par le roulement de l'anneau sur les galets.

Pour obtenir des effort presseurs élevés par déformation d'un anneau, celui-ci peut être réalisé en acier. Cette réalisation doit être très précise, et est relativement onéreuse.

C'est pourquoi suivant une autre particularité de l'invention, l'anneau presseur est constitué par un fil métallique enroulé à spires jointives, de préférence en acier, surmoulé dans une matière plastique choisie avec un coefficient de frottement approprié en fonction de l'utilisation du mécanisme comme réducteur-multiplicateur à une ou plusieurs sorties. La fabrication d'un tel anneau est beaucoup moins onéreuse que celle d'un anneau constitué exclusivement en acier (US-A-23 44 078).

D'autre particularités et avantages de l'invention apparaitront au cours de la description qui va suivre, faite en référence aux dessins annexés qui en illustrent à titre d'exemples deux modes de réalisation nons limitatifs :

– la Figure 1 est un schéma de principe illustrant un premier mode de réalisation du mécanisme réducteur-multiplicateur selon l'invention ;

– la Figure 2 est une vue en coupe axiale d'un anneau presseur faisant partie du mécanisme selon l'invention ;

– la Figure 3 est une vue en perspective d'une première forme de réalisation industrielle du mécanisme réducteur-multiplicateur selon l'invention ;

– la Figure 4 est une vue en couple axiale du mécanisme suivant 4-4 de la Figure 5 ;

– la Figure 5 est une vue en coupe suivant 5-5 de la Figure 4 ;

– la Figure 6 est une vue en perspective d'une seconde forme de réalisation industrielle du mécanisme réducteur-multiplicateur selon l'invention ;

– la Figure 7 est une vue en coupe axiale suivant 7-7 du mécanisme de la Figure 8 ;

– la Figure 8 est une vue en coupe transversale suivant 8-8 de la Figure 7 ;

– la Figure 9 est une vue en élévation du mécanisme suivant la flèche F de la Figure 7.

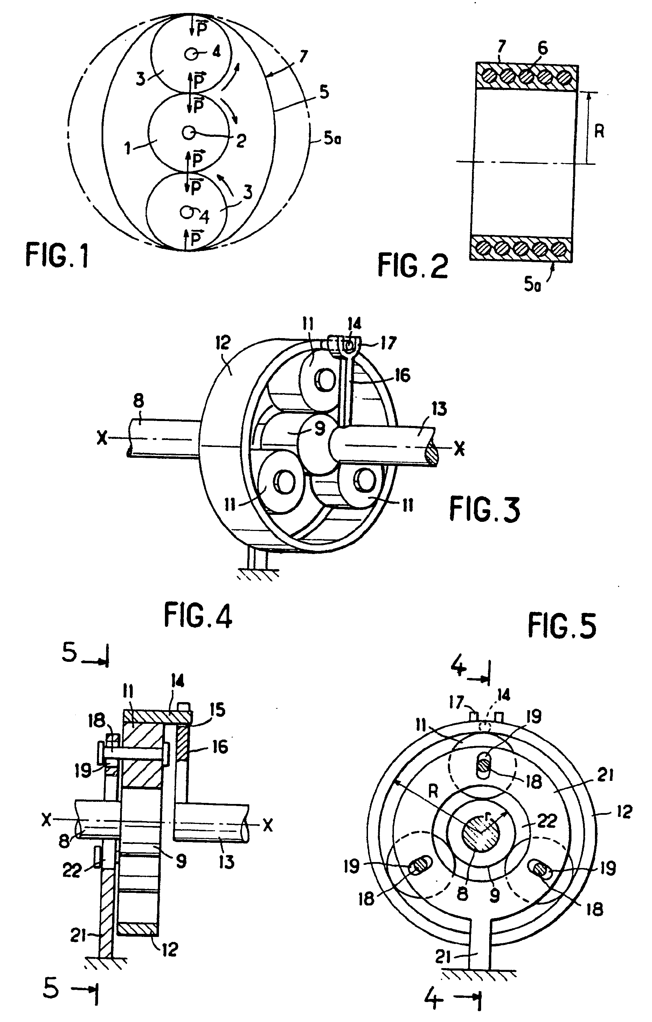

Le mécanisme réducteur-multiplicateur représenté schématiquement à la Figure 1 comprend un cylindre terminal 1 d'un arbre 2, deux galets 3 fixés coaxialement à des arbres respectifs 4, diamétralement opposés de part et d'autre du cylindre 1 avec la surface duquel ils sont en contact de roulement, et un anneau 5 enveloppant le cylindre 1 et les galets 3, sur la surface extérieure desquels il exerce un effort presseur radial P passant par les axes 2 et 4.

L'anneau 5 une fois monté sur les galets 3, présente une forme ovale ou sensiblement elliptique par rapport à son contour circulaire d'origine 5a. En effet, l'anneau 5a a un diamètre intérieur sensiblement inférieur à la somme des diamètres du cylindre 1 et des deux galets 3, la déformation entre la position initiale 5a et la position référencée 5 de cet anneau après montage étant très exagérée sur la Figure 1 par rapport à la réalité. La déformée, donc le rayon d'origine de l'anneau 5a, est déterminé en fonction des matériaux utilisés pour les galets 3 et pour l'anneau lui-même, ainsi qu'en fonction du couple à transmettre. Si l'arbre 2 et son cylindre 1 sont utilisés comme entrée, ils transmettent le couple moteur aux galets 3, puis à l'anneau presseur 5 dans le cas où le mécanisme fonctionne comme réducteur ou aux arbres de sortie 4 dans le cas où le mécanisme fonctionne avec plusieurs sorties.

En raison de la détermination de son diamètre initial comme indiqué ci-dessus, l'anneau circulaire 5a est obligé de subir une déformation une fois monté sur les galets 3, ce qui crée des efforts radiaux P proportionnel à la déformation.

Du fait de l'absence de frottement de glissement dans ce mécanisme, où seuls subsistent des frottements de roulement entre l'anneau 5 et les galets 3, le rendement entre l'entrée et la sortie est augmenté par rapport au dispositif antérieur à galets et paliers. De plus, un tel mécanisme est silencieux et relativement peu onéreux.

L'anneau 5 ne transmet pas le couple moteur, sa seule fonction étant dans le dispositif de la Figure 1 (qui peut comporter plusieurs galets 3) d'exercer des efforts presseurs radiaux P sur les galets 3. L'anneau 5 doit donc être choisi en un matériau à faible coefficient de frottement de roulement.

L'anneau 5a (Figure 2) peut être avantageusement constitué par un fil métallique 6 enroulé à spires jointives, de préférence en acier, surmoulé d'une matière plastique 7 choisie avec un coefficient de frottement approprié, en fonction de l'utilisation du mécanisme comme réducteur-multiplicateur à une ou plusieurs sorties. Le fil métallique fournit les caractéristiques mécaniques de l'anneau 5a, son élasticité en particulier étant convenablement choisie. La précision finale de celui-ci est obtenue par un surmoulage de faible épaisseur de la matière plastique 7, adapté au cahier des charges.

La forme de réalisation du mécanisme réducteur-multiplicateur à une sortie des Figures 3 à 5 comporte un premier arbre 8 muni d'un cylindre terminal 9 d'axe X-X, trois galets 11 disposés à intervalles angulaires égaux autour du cylindre 9 et en appui sur ce dernier, un anneau presseur 12 enveloppant les galets 11 sur la surface desquels ils exercent un effort de compression radiale, et un arbre 13 d'axe X-X, disposé du côté de l'anneau 12 opposé à celui de l'arbre 8.

L'anneau-presseur 12 est muni de moyens de transmission du couple, par exemple (Figures 3 et 4), au moins un pion 14 solidaire de l'anneau 12, s'étendant parallèlement à l'axe X-X et engagé dans une ouverture 15 formée à l'extrémité d'un bras radial 16 solidaire de l'arbre 13. L'ouverture 15 peut être, comme représenté, délimitée par un étrier terminal 17 du bras 16. Par ailleurs, les galets 11 sont montés rotatifs autour d'axes 18 traversant des lumières 19, de préférence oblongues dans le sens radial, et formées dans un flasque fixe 21 disposé perpendiculairement à l'axe X-X du côté de l'arbre 8. Ce dernier ainsi que son cylindre terminal 9 traversent une ouverture de passage 22 du flasque 21. Le cylindre 9 a un rayon r, tandis que l'anneau-presseur 12 a un rayon intérieur R.

Si le couple moteur est transmis par l'arbre 8 et son cylindre 9, le mécanisme fonctionne comme réducteur de la manière suivante. L'anneau 12 exerçant sur les galets 11 une compression radiale qui les applique tangentiellement sur la surface du cylindre 9, le couple moteur est transmis de ce dernier aux galets 11, puis de ceux-ci à l'anneau presseur 12, et enfin à l'arbre de sortie 13 par le pion 14 et le bras 16. Le rapport de réduction est alors égal à r/R.

Si l'on utilise l'arbre 13 comme arbre d'entrée moteur, le couple est transmis par le bras 16 au pion 14 puis à l'anneau 12, aux galets 11, au cylindre et à l'arbre de sortie 8. Le mécanisme fonctionne alors comme multiplicateur avec un rapport de multiplication R/r.

Les lumières 19, de préférence oblongues, permettent de créer un jeu radial au niveau des galets 11, de sorte que l'effort presseur exercé par l'anneau 12 est repris intégralement par le cylindre 9, et non en partie par les axes 18 si les lumières 19 n'existaient pas.

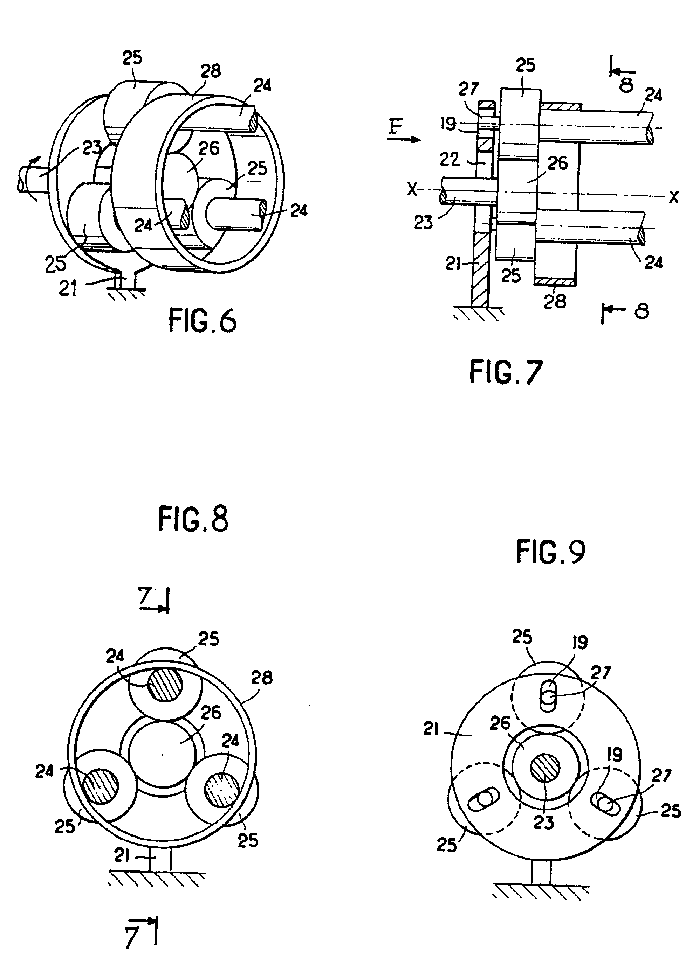

La forme de réalisation du mécanisme illustré aux Figures 6 à 9 permet de limiter encore les pertes par frottement de roulement. Ce mécanisme comprend un arbre d'entrée 23 et trois arbres de sortie 24 coaxiaux à des galets correspondants 25 disposés autour d'un cylindre terminal 26 de l'arbre 23, à intervalles angulaires égaux et en appui tangentiel sur la surface de ceux-ci. Les galets 25 sont prolongés par des axes ou tourillons 27 engagés dans les lumières 19, de préférence oblongues radialement et formées dans un flasque fixe 21 percé d'une ouverture 22 de passage du cylindre 26 et de l'arbre 23.

Ce mécanisme comprend un anneau presseur 28 qui s'applique, non pas sur les génératrices des galets 25, mais sur les arbres 24 qu'il enveloppe, en exerçant sur ceux-ci un effort radial de compression déterminé.

L'avantage d'une telle disposition de l'anneau presseur 28 consiste dans le fait que, pour un même encombrement extérieur du mécanisme, déterminé par les rayons du cylindre 26 et des galets 25, le travail des forces de frottement de roulement est inférieur au travail qui serait engendré par les forces de frottement si l'anneau était appliqué sur les galets 25. En effet, le rayon des arbres 24 est nettement inférieur à celui des galets 25.

Le matériau plastique 7 utilisé pour l'anneau presseur est choisi en fonction du mécanisme auquel il doit être intégré. Si ce mécanisme fonctionne avec une seule sortie en réducteur, comme celui des Figures 3 à 5, la matière plastique doit avoir un bon coefficient de frottement de roulement, car l'anneau transmet le couple. Une matière telle qu'un polyamide est par exemple appropriée à une telle utilisation. Si l'anneau doit faire partie d'un mécanisme à plusieurs sorties comme celui des Figures 6 à 9, l'anneau ne transmet pas le couple mais assure seulement l'effort presseur. La matière plastique 7 doit alors avoir un faible coefficient de frottement de roulement ; on peut utiliser par exemple un polycarbonate, un acétal, un polyester, etc.

Bien entendu dans les divers modes de réalisation décrits, le nombre de galets peut être quelconque en étant toutefois au minimum de deux.

## Revendications

1. Mécanisme réducteur-multiplicateur, comportant des galets (3, 11, 25) de transmission d'un couple d'un arbre d'entrée (2, 8, 23) à au moins un arbre de sortie (13, 24), et un anneau élastique (5a) disposé de manière à exercer sur les galets (3, 11, 25) un effort presseur radial (P) les appliquant sur l'arbre d'entrée (2, 8, 23), caractérisé en ce que l'anneau presseur (5a) est constitué par un fil métallique (6) enroulé en spires, de préférence en acier, de caractéristiques mécaniques déterminées et dont l'élasticité est convenablement choisie, surmoulé dans une matière plastique (7) choisie avec un coefficient de frottement approprié en fonction de l'utilisation du mécanisme.

2. Anneau presseur élastique pour mécanisme réducteur-multiplicateur comportant des galets (3, 11, 25) de transmission d'un couple d'un arbre d'entrée (2, 8, 23) à au moins un arbre de sortie (13, 24), disposé de manière à exercer sur les galets (3, 11, 25) un effort presseur radial (P) les appliquant sur l'arbre d'entrée (2, 8, 23), caractérisé en ce qu'il est constitué par un fil métallique (6) enroulé en spires, de préférence en acier, de caractéristiques mécaniques déterminées et dont l'élasticité est convenablement choisie, surmoulé dans une matière plastique (7) choisie avec un coefficient de frottement approprié en fonction de l'utilisation du mécanisme.

## Claims

1. Reducer-multiplier mechanism, comprising rollers (3, 11, 25) for the transmission of torque from an input shaft (2, 8, 23) to at least one output shaft (13, 24), and a resilient ring (5a) arranged so as to exert on the rollers (3, 11, 25) a radial pressing force (P) applying them against the input shaft (2, 8, 23), characterised in that the pressing ring (5a) comprises a spirally wound metallic wire (6), preferably of steel, of predetermined mechanical characteristics and whose resilience is suitably selected, moulded in a plastics material (7) selected with a friction coefficient appropriate as a function of the utilisation of the mechanism.

2. Resilient pressing ring for a reducer-multiplier mechanism comprising rollers (3, 11, 25) for transmission of torque from an input shaft (2, 8, 23) to at least one output shaft (13, 24), arranged so as to exert on the rollers (3, 11, 25) a radial pressing force (P) applying them against the input shaft (2, 8, 23), characterised in that it is comprised of a spirally wound metallic wire (6), preferably of steel, of predetermined mechanical characteristics and whose resilience is suitably selected, moulded in a plastics material (7) selected with a friction coefficient appropriate as a function of the utilisation of the mechanism.

**Ansprüche**

1. Über-/Untersetzungsgetriebe mit Rollen (3, 11, 25) zur Übertragung eines Drehmoments von einer Eingangswelle (2, 8, 23) auf wenigstens eine Abtriebswelle (13, 24) und mit wenigstens einem elastischen Ring (5a), der derart angeordnet ist, daß er auf die Rollen (3, 11, 25) eine radiale Druckkraft (P) ausübt, durch die sie an die Eingangswelle (2, 8, 23) angedrückt werden, dadurch **gekennzeichnet,** daß der Druckring (5a) gebildet wird durch einen schraubenförmig gewickelten Metalldraht (6), vorzugsweise aus Stahl, mit bestimmten mechanischen Eigenschaften und geeignet gewählter Elastizität, der in ein Kunststoffmaterial (7) mit einem im Hinblick auf die Verwendung des Getriebes angemessenen Reibungskoeffizienten eingegossen ist.

2. Elastischer Druckring für Über-/Untersetzungsgetriebe mit Rollen (3, 11, 25) zur Übertragung eines Drehmoments von einer Eingangswelle (2, 8, 23) auf wenigstens eine Abtriebswelle (13, 24), der derart angeordnet ist, daß er auf die Rollen (3, 11, 25) eine radiale Druckkraft (P) ausübt, durch welche die Rollen an die Eingangswelle (2, 8, 23) angedrückt werden, dadurch **gekennzeichnet,** daß der Druckring gebildet wird durch einen schraubenförmig gewickelten Metalldraht (6), vorzugsweise aus Stahl, mit bestimmten mechanischen Eigenschaften und geeignet gewählter Elastizität, der in ein Kunststoffmaterial (7) mit einem im Hinblick auf die Verwendung des Getriebes angemessenen Reibungskoeffizienten eingegossen ist.

FIG.1

FIG.2

FIG.3

FIG.4

FIG.5

FIG.6

FIG.7

FIG.8

FIG.9